# EUROPÄISCHE PATENTSCHRIFT

(11) **EP 1 166 045 B1**
(45) Veröffentlichungstag und Bekanntmachung des Hinweises auf die Patenterteilung: **19.05.2004**
(21) Anmeldenummer: 00915190.3
(22) Anmeldetag: 24.03.2000
(51) Int. Cl.: G01C 22/00, A63C 17/26, G01P 3/487, G01P 1/07

(54) **VORRICHTUNG UND VERFAHREN ZUM BESTIMMEN UND ANZEIGEN VON FORTBEWEGUNGS- ODER FITNESSGRÖSSEN EINES BENUTZERS EINES SPORTGERÄTS**
DEVICE AND METHOD FOR DETERMINING AND DISPLAYING THE PROGRESSIVE MOTION VARIABLES OR FITNESS VARIABLES PERTAINING TO A USER OF A PIECE OF SPORTS EQUIPMENT
DISPOSITIF ET PROCEDE POUR LA DETERMINATION ET L'AFFICHAGE DE VARIABLES DE DEPLACEMENT ET DE FITNESS DE L'UTILISATEUR D'UN APPAREIL DE SPORT

(30) Priorität: 29.03.1999 DE 19914262; 24.05.1999 DE 19923452
(43) Veröffentlichungstag der Anmeldung: 02.01.2002
(73) Patentinhaber: Groos, Daniel, 80796 München (DE)
(72) Erfinder: Groos, Daniel, 80796 München (DE)
(74) Vertreter: Kudlek, Franz Thomas, Dipl.-Phys.
(86) Internationale Anmeldenummer: PCT/EP2000/002635
(87) Internationale Veröffentlichungsnummer: WO 2000/057969

(56) Entgegenhaltungen:
- US-A- 5 721 539

## Beschreibung

Die vorliegende Erfindung betrifft eine Vorrichtung zum Bestimmen und Anzeigen von Fortbewegungsgrößen eines Benutzers eines insbesondere mit einem Untergrund wenigstens zeitweise in Kontakt stehenden Sportgeräts nach dem Oberbegriff des Patentanspruchs 1 sowie ein entsprechendes Verfahren nach dem Oberbegriff des Patentanspruchs 4.

Beispielsweise an den Füßen anbringbare Sportgeräte, beispielsweise Inline-Skates, Rollschuhe, Trockenskier, Skateboards, Snakeboards oder Sportschuhe erfreuen sich großer Beliebtheit. Es sei in diesem Zusammenhang auch andere Arten von Sportgeräten hingewiesen, beispielsweise Fitnessgeräte, Kraftmaschinen, Skier, Schlitten, Bobs; Fahrräder,... Es besteht ein Bedürfnis, die unter Zuhilfenahme derartiger Sportgeräte erbrachten sportlichen Leistungen, beispielsweise zurückgelegte Strecken oder erreichte Geschwindigkeiten (momentane Geschwindigkeit, Maximalgeschwindigkeit, Durchschnittsgeschwindigkeit) zu ermitteln.

Aus der DE-GM 92 09 825.8 ist ein Road-Skate mit einem Fahrtcomputer bekannt, welcher am Schuh des Road-Skate angebracht ist. Zur Übermittlung von Daten von Rollen des Road-Skates an diesen Fahrtcomputer ist ein Reibrad vorgesehen, das mit einem an der Rollenaufhängung angebrachten Mitnehmerrad zusammenwirkt. Die Anzeige der ermittelten bzw. berechneten Fortbewegungsdaten eines Benutzers erfolgt hier an der Oberseite des Schuhes des Road-Skates. Das Einsehen dieser Anzeige muß als unpraktisch und benutzerunfreundlich angesehen werden.

Aus der WO98/26846 ist ein Rad für Rollschuhe und Rollbretter mit im Rad angeordneten Mitteln zur Bestimmung seiner Drehgeschwindigkeit und/oder der tatsächlichen Fortbewegungsgeschwindigkeit eines Benutzers des Sportgeräts bekannt. Hierbei ist insbesondere vorgesehen, daß das Rad mit Funkverbindungsmitteln zur Datenübertragung auf eine insbesondere armbanduhrartig ausgebildete Anzeigevorrichtung zur Anzeige von ermittelten Daten ausgebildet ist.

Aus der DE 297 13 992 U1 ist eine Einrichtung zur Messung von Fortbewegungsparametern bei Inline-Skates bekannt. Auch hier werden mittels eines Sender-Empfänger-Systems Fortbewegungsdaten auf eine Anzeigevorrichtung, beispielsweise eine Armbanduhr, übertragen. Als nachteilig bei dieser Einrichtung wird angesehen, daß eine kontinuierliche Übertragung von ermittelten Daten auf den Empfänger bzw. die Anzeigevorrichtung erfolgt. Daher besteht am Inline-Skate, d.h. dem Ort des Senders des Sender-Empfänger-Systems, ein hoher Energiebedarf. Dies hat beispielsweise bei einem batteriebetriebenen Sensor zur Folge, daß die Batterie häufig ausgewechselt werden muß, wodurch die Bedienerfreundlichkeit der Einrichtung stark herabgesetzt ist.

Aus der WO98/06466 ist ebenfalls eine Geschwindigkeitsmeßvorrichtung für Rollschuhe, insbesondere Inline-Skates, bekannt, bei denen die Rollen hintereinander angeordnet sind. Hierbei ist mindestens eine Meßeinheit je Fuß am Inline-Skate angebracht oder integriert. Ein Impulsgebersystem besteht in einer bevorzugten Ausführungsform aus einem Magneten und einem Magnetschalter.

Ein ähnliches System ist schließlich aus der US 5,721,539 bekannt. Dieses Dokument offenbart eine Vorrichtung zum Bestimmen und Anzeigen von Fortbewegungs- oder Fitnessgrößen eines Benutzers eines Sportgeräts mit in oder an dem Sportgerät angeordneten Mitteln zur Aufnahme oder wenigstens teilweisen Verarbeitung von Fortbewegungs- oder Fitnessdaten, Sendemitteln zum Übertragen der Fortbewegungs- oder Fitnessdaten auf für den Benutzer einsehbare, mit entsprechenden Empfangsmitteln ausgebildete Mittel zur weiteren Verarbeitung und/oder Anzeige der aufgenommenen oder der wenigstens teilweise verarbeiteten Fortbewegungs- oder Fitnessdaten. Ausgehend von dieser Druckschrift stellt sich als Aufgabe der Erfindung die Bereitstellung einer Vorrichtung und eines Verfahrens, mit welchem eine Bestimmung und eine Anzeige von Fortbewegungsgrößen eines Benutzers eines mit einem Untergrund wenigstens zeitweise in Kontakt stehenden Sportgeräts in einfacher Weise möglich ist, wobei gegenüber herkömmlichen Vorrichtungen bzw. Verfahren eine größere Bedienerfreundlichkeit und ein geringerer Energiebedarf verwirklicht ist.

Diese Aufgabe wird gelöst durch eine Vorrichtung mit den Merkmalen des Patentanspruchs 1 sowie ein entsprechendes Verfahren mit den Merkmalen des Patentanspruchs 5.

Erfindungsgemäß ist nun eine Bestimmung und eine Anzeige von Fortbewegungsgrößen eines Benutzers eines Sportgerätes, beispielsweise eines Inline-Skates, in sehr einfacher, bedienerfreundlicher und energiesparender Weise möglich. Dadurch, daß ein Sende- bzw. Empfangsbetrieb nur während bestimmter Zeitintervalle erfolgt, kann der Energieverbrauch der Sende- bzw. Empfangsmittel gegenüber aus dem Stand der Technik bekannten Lösungen spürbar vermindert werden. Dies hat zur Folge, daß beispielsweise eine in oder an dem Sportgerät, insbesondere in oder an einem Rad eines Inline-Skates, vorgesehene Batterie, welche zum Betrieb des Senders und/oder beispielsweise eines Mikrocontrollers zur Verarbeitung aufgenommener Fortbewegungs- oder Fitnessdaten dient, eine wesentlich längere Lebensdauer als bei herkömmlichen Lösungen aufweist.

Es sei zu verstehen gegeben, daß der in der vorliegenden Anmeldung, insbesondere in den Patentansprüchen, verwendete Begriff "Sportgerät" sämtliche denkbaren Sportgeräte umfassen soll, von denen Fortbewegungs- oder Fitnessdaten ableitbar sind. Zusätzlich zu den bereits erwähnten an den Füßen anbringbaren Sportgeräten seien beispielsweise mit den Händen zu greifende Sportgeräte, beispielsweise Tennis- oder Golfschläger, oder auch statische Fitnessgeräte, beispielsweise Tretmaschinen oder Stepmaschinen, erwähnt. Durch Anbringung eines entsprechend ausgebildeten, mit Übertragungsmitteln ausgebildeten Sensors am Kopf eines Golf- oder Tennisschlägers ist es so beispielsweise möglich, Geschwindigkeits- oder Beschleunigungsdaten eines derartigen Schlägers auf ein für den Spieler sichtbares Display zu übertragen. Auch Höhenmesser werden von dem verwendeten Begriff umfaßt.

Als typische Fortbewegungsdaten seien insbesondere momentane Geschwindigkeit, Durchschnittsgeschwindigkeit, zurückgelegte Strecke, Beschleunigung oder auch überwundene Höhenmeter genannt. Typische Fitnessdaten sind beispielsweise Pulsraten, Schwitzraten usw. Von dem Begriff "Fitnessdaten" seien aber auch beliebige andere meßbare physiologische Daten bzw. Parameter umfaßt.

Die erf indungsgemäße Vorrichtung zeichnet sich durch den Sendemitteln und den Empfangsmitteln zugeordnete Synchronisationsmittel zur Abstimmung von Einschaltzeiten und Ausschaltzeiten der Sendemittel und der Empfangsmittel aufeinander aus. Derartige Synchronisationsmittel können sowohl hartware- als auch softwareartig realisiert sein, wobei entsprechend ausgebildete Mikrokontroller zweckmäßigerweise in diesem Zusammenhang eingesetzt werden.

Erfindungsgemäß sind die Sendemittel und die Empfängermittel derart ausgebildet, daß ihre jeweils ersten Intervalle, d.h. die Intervalle während denen ein Senden bzw. ein Empfang stattfindet, sich im wesentlichen überlappen. Durch diese Maßnahme ist es möglich, den Energieverbrauch sowohl auf Senderseite als auch Empfängerseite zu minimieren. Eine Synchronisierung der jeweils ersten Intervalle der Sendermittel und Empfängermittel kann beispielsweise dadurch erfolgen, daß vor Beginn einer Messung die empfängerseitige Vorrichtung zur weiteren Verarbeitung bzw. zur Anzeige der Fortbewegungs- oder Fitnessdaten von dem Benutzer aktiviert wird, woraufhin ein Mikrocontroller dieser Vorrichtung den Empfänger für ein bestimmtes Startzeitintervall (beispielsweise 30 Sekunden) einschaltet. Empfängt der Empfänger in dieser Zeit ein Signal von der senderseitigen Elektronik kann dieses Signal dazu verwendet werden, die jeweiligen ersten Intervalle der Sendemittel und der Empfängermittel zu synchronisieren. Dies hat zur Folge, daß die Empfängermittel nur dann angeschaltet werden, wenn mit einer Sendung durch die Sendemittel zu rechnen ist. Erkennen die Empfängermittel während des Startintervalls kein Signal, ist es beispielsweise möglich, die empfängerseitige Vorrichtung zur weiteren Verarbeitung bzw. zur Anzeige der Fortbewegungs- oder Fitnessdaten automatisch abzuschalten, wobei sie vorzugsweise zur Durchführung einer Messung dann erneut manuell eingeschaltet werden muß.

Entsprechende Vorteile ergeben sich bei einer Batterie zur Energieversorgung der für den Benutzer einsehbaren Vorrichtung zur weiteren Verarbeitung und/oder zur Anzeige der Fortbewegungs- oder Fitnessdaten.

Vorteilhafte Ausgestaltungen der erfindungsgemäßen Vorrichtung sowie des erfindungsgemäßen Verfahrens sind Gegenstand der Unteransprüche.

Nach einer bevorzugten Ausführungsform der Erfindung ermitteln die Mittel zur Aufnahme oder wenigstens teilweisen Verarbeitung von Fortbewegungsdaten ein Signal auf der Grundlage der Umdrehungen eines Rades des Sportgerätes, insbesondere eine die Zeit pro Raddrehung darstellende Funktion, wobei dieses Signal auf die Mittel zur weiteren Verarbeitung übertragbar und dort unter Berücksichtigung eines einstellbaren tatsächlichen Raddurchmessers modifizierbar ist. Durch diese Maßnahme ist es in einfacher Weise möglich, einen Großteil der Verarbeitung der Fortbewegungs- oder Fitnessdaten senderseitig, d.h. unmittelbar am Sportgerät, durchzuführen. Empfängerseitig ist es beispielsweise möglich, einen vorprogrammierbaren Standardraddurchmesser oder -umfang einzugeben, so daß eine empfängerseitig angeordnete Software die tatsächlich ermittelten Fortbewegungsdaten (beispielsweise Strecke pro Zeit) in einfacher Weise berechnen kann.

Zweckmäßigerweise wird die Umdrehung des Rades mittels eines nicht drehbar in oder an dem Rad ausgebildeten Reed-Kontaktes, der mit einem mit dem Rad drehbaren Magnet zusammenwirkt, ermittelt. Der Magnet ist hierbei derart in das Rad integriert, daß er in dem Reed-Kontakt, welcher Teil der Mittel zur Aufnahme oder wenigstens teilweisen Verarbeitung von Fortbewegungsdaten ist, einen Stromkreis schließt. Ein derartiger Reed-Kontakt-Mechanismus erweist sich in der Praxis als besonders robust und zuverlässig.

Eine bevorzugte Ausführungsform der Erfindung wird nun anhand der beigefügten Zeichnung im einzelnen erläutert. In dieser zeigt:
- Fig. 1: in perspektivischer Ansicht eine bevorzugte, im Rahmen der erfindungsgemäßen Vorrichtung einsetzbare Ausführungsform eines Rades für ein Inline-Skate, wobei zur Veranschaulichung der erfindungsgemäßen Vorrichtung zusätzlich die Anordnung des Rades an einem Inline-Skate sowie die Übertragung von meßdaten an eine armbanduhrartig ausgestattete Vorrichtung zur weiteren Verarbeitung und/oder Anzeige aufgenommener oder teilweise verarbeiteter Fortbewegungsdaten dargestellt sind,
- Fig. 2: eine weitere bevorzugte Ausführungsform eines im Rahmen der Erfindung einsetzbaren Rades eines Inline-Skates,
- Fig. 3: ein schematisches Blockschaltbild zur Erläuterung des erfindungsgemäß einsetzbaren Sender-Empfänger-Systems,
- Fig. 4: ein Diagramm, in welchem die realen Zeiten pro Umdrehung eines Rades gegen die Umdrehungen aufgetragen sind, und
- Fig. 5: ein Diagramm, in welchem schematisch die jeweilige Zeit pro Umdrehung gegen die Zeit aufgetragen ist, und

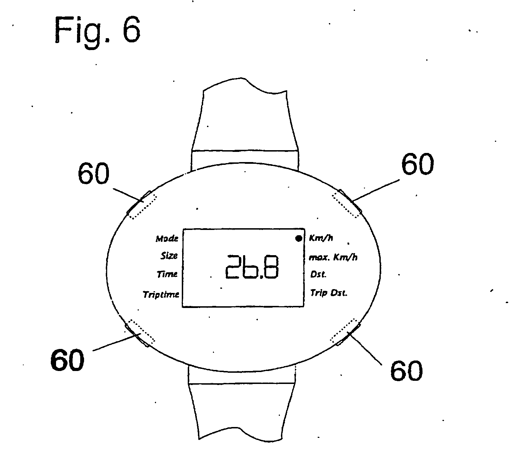

- Fig. 6: eine schematische Draufsicht auf eine bevorzugte Ausführungsform einer erfindungsgemäß verwendbaren Anzeigeeinrichtung.

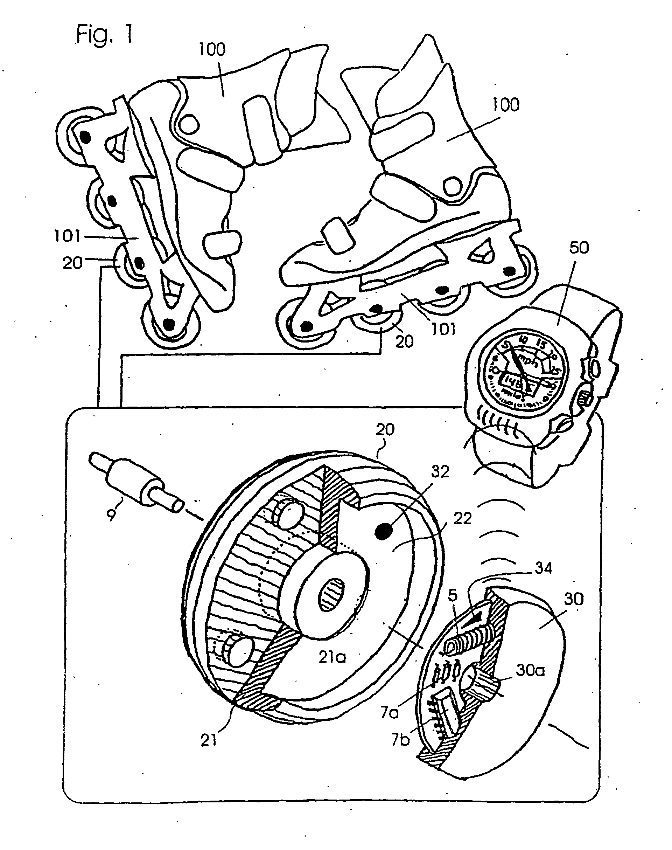

Unter Bezugnahme auf Fig. 1 werden zunächst die einzelnen Komponenten der erfindungsgemäßen Vorrichtung am Beispiel eines Tachometers für ein Inline-Skate erläutert.

Ein Rad 20 weist einen mit einer Ausnehmung 22 ausgebildeten Radkörper 21 auf. Ein Permanentmagnet 32 ist hierbei in den Radkörper 21 integriert.

Eine mögliche Positionierung des Rades an einem Rollschuh bzw. Inline-Skate 100 ist in Fig. 1 ebenfalls schematisch dargestellt. Die Befestigung der Radachse 9 an einer Radschiene 101 erfolgt hierbei in an sich bekannter Weise, und soll hier nicht weiter erläutert werden.

In der Ausnehmung 22 des Radkörpers 21 ist ein puckförmiges bzw. zylinderscheibenförmiges, insbesondere kegelstumpfförmiges Bauteil 30 einführbar bzw. einpaßbar. In diesem Bauteil 30 sind die notwendigen elektrischen bzw. elektronischen Komponenten zur Aufnahme oder wenigstens teilweisen Verarbeitung von Fortbewegungsdaten auf der Grundlage einer Wechselwirkung zwischen dem Inline-Skate und einem nicht dargestellten Untergrund integriert. Schematisch sind (beispielhaft) eine Spule 5, Widerstände bzw. ein Verstärker 7a und ein Mikrocontroller 7b der Steuerungselektronik dargestellt. Diese Bauteile sind vorzugsweise in dem Bauteil 30, welches insbesondere aus Kunstharz besteht, eingegossen bzw. wasserdicht verkapselt. Das Bauteil 30 weist eine zentrale Ausnehmung 30a auf, welche bei Einführen des Bauteils 30 in die Ausnehmung 22 des Radkörpers 21 mit einer dort ausgebildeten zentralen Ausnehmung 21a fluchtet. Durch die fluchtenden Ausnehmungen 21a, 30a ist eine drehfeste Achse 9 durchführbar. Das Bauteil 30 ist mit der Achse 9 drehfest verbindbar. Bei einem Abrollen des Rades verbleiben daher die Achse 9 und das Bauteil 30 bezüglich des rotierenden Rades 20 drehfest. Hierbei zweckmäßigerweise verwendete Dreh- bzw. Wälzlager sind in Fig. 1 nicht dargestellt. Es erweist sich als vorteilhaft, daß das die Steuerungselektroni.k enthaltende Bauteil 30 modulartig auswechselbar ist. Mittels eines Senders bzw. Transmitters 34 sind aufgenommene bzw. mittels des Mikrocontrollers 7b teilweise verarbeitete Fortbewegungsdaten über Funk auf eine armbanduhrartig ausgestaltete Vorrichtung 50, welche zur weiteren Verarbeitung bzw. zur Anzeige der Fortbewegungsdaten dient, übertragbar, wie in Fig. 1 ebenfalls schematisch dargestellt ist. Es sei an dieser Stelle darauf hingewiesen, daß die vollständige Verarbeitung der Fortbewegungsdaten (zur Bereitstellung der Fortbewegungsgrößen) bereits mittels des Mikrocontrollers 7b, d.h. senderseitig, erfolgen kann. Die Vorrichtung 50 dient in diesem Falle lediglich zur Anzeige der auf der Grundlage der Fortbewegungsdaten ermittelten Fortbewegungsgrößen.

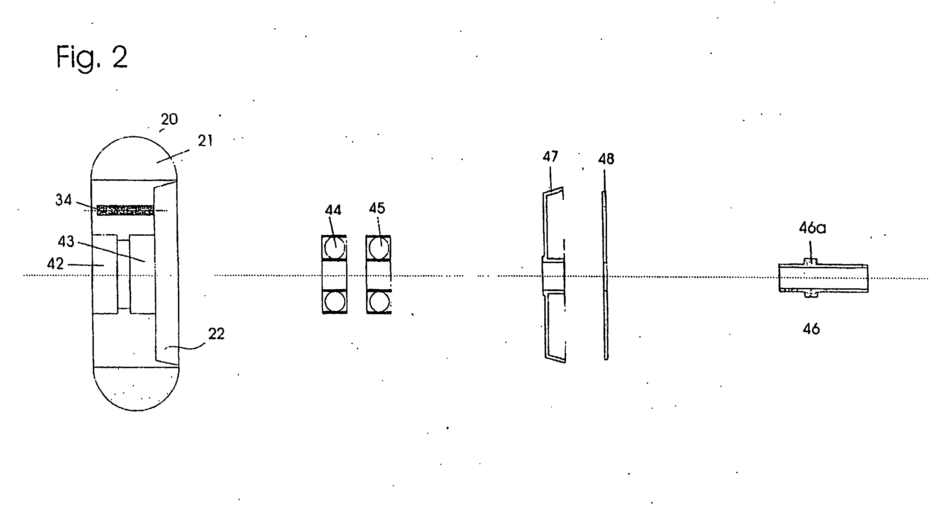

Eine.besonders bevorzugte Ausführungsform eines Rades zur Verwendung bei der vorliegenden Erfindung ist in Fig. 2 in einer explodierten perspektivischen Ansicht dargestellt. Gleiche Bauteile sind hier mit Bezugszeichen entsprechend der Fig. 1 bezeichnet.

Besonders deutlich ist hier zu erkennen, wie der Magnet 32 in den Radkörper 21 des Rades 20 integriert ist. Es sind ferner, sich anschließend an die Ausnehmung 22, zwei weitere Ausnehmungen 42, 43 vorgesehen, in welche Kugel- bzw. Wälzlager 44, 45 einführbar sind. Nach Einbringung des ersten Wälzlagers 44 in die Ausnehmung 42 ist hierbei vorgesehen, ein Beabstandungselement 46, welches einen Beabstandungsvorsprung 46a aufweist, in die mittige Ausnehmung des Wälzlagers 44 bis zum Anschlag (d.h. Kontakt zwischen Wälzlager 44 und Vorsprung 46a) einzuführen, und entsprechend das Wälzlager 45 auf der entgegengesetzten Seite des Vorsprungs 46a des Beabstandungselements 46 aufzuschieben. Der (in der Fig.) rechte Teil des Beabstandungselements 46 weist eine derartige Länge auf, daß ein Gehäuse 47 zusammen mit einem Gehäusedeckel 48 auf das Beabstandungselement aufschiebbar ist. Das Gehäuse 47 ist zur Aufnahme des (in der Fig. 2 nicht dargestellten) puckartigen Bauteils 30, welches die Elektronikkomponenten der erfindungsgemäßen Vorrichtung enthält, vorgesehen.

Das dargestellte Rad hat die Funktion eines normalen Laufrades eines Inline-Skates und kann daher ohne Schwierigkeiten gegen eine herkömmliche Laufrolle ausgetauscht werden.

Die in Fig. 1 dargestellte Radachse 9 ist durch das Beabstandungselement 46 hindurchführbar und an diesem fixierbar.

Wie bereits unter Bezugnahme auf Fig. 1 erläutert, sind die Bauteile 30, 47, 48 sowie 46 bei einer Benutzung des Inline-Skates drehfest, während sich der Radkörper 21 mit dem darin integrierten Magneten 32 um die Drehachse des Rades dreht.

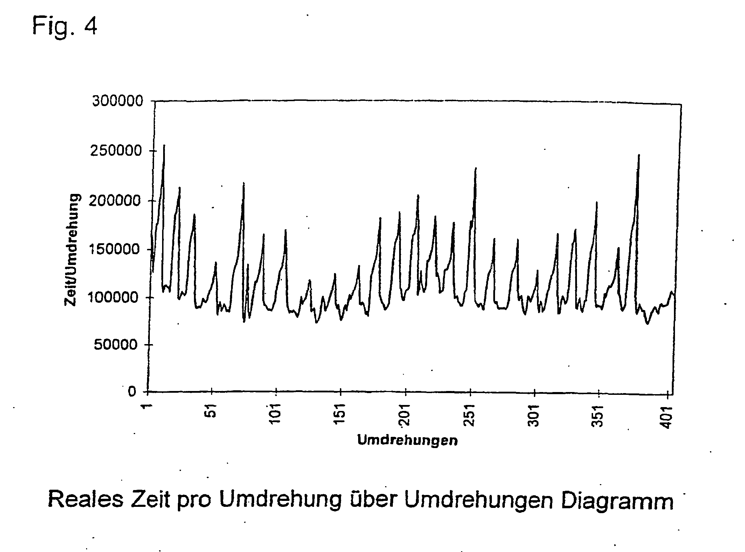

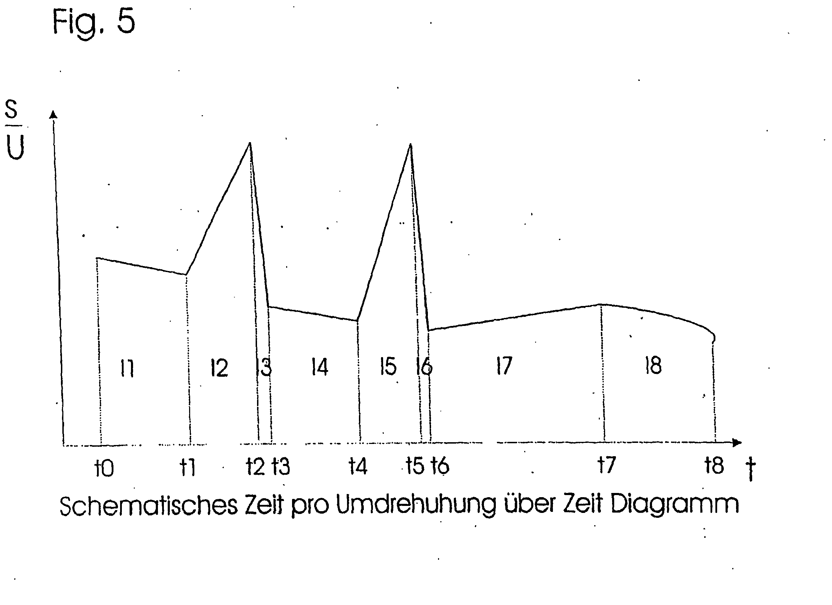

Der Magnet 32 ist derart in den Radkörper 21 integriert, daß er in einem (nicht im einzelnen dargestellten) Reed-Kontakt der sich nicht drehenden Radelektronik einen Stromkreis schließt. Die auf diese Weise erzeugten Impulse werden von dem in dem Bauteil 30 angeordneten Mikrocontroller 7b verarbeitet. Es sind auch andere geeignete Mittel, insbesondere Impulserzeuger zur Ermittlung der Radumdrehungen denkbar. Insbesondere wird die Zeitdauer der Radumdrehungen ermittelt und zwischengespeichert. Aus der so erstellten Funktion der Zeit pro Radumdrehung (den beispielhaften realen Verlauf einer derartigen Funktion zeigt Fig. 4, einen schematischen, geglätteten Verlauf dieser Funktion Fig. 5) wird beispielsweise einmal pro Sekunde (wobei jedoch auch jedes andere Zeitintervall denkbar ist) die für einen vorprogrammierten Standardraddurchmesser (oder -umfang) gültige Standardstrecke pro Sekunde bzw. Zeitintervall von einer in den Mikrocontroller 7b integrierten Software ermittelt. Die Standardstrecke stellt hierbei eine auf den Standardraddurchmesser normierte Strecke dar.

Die Standardstrecke, welche im Sinne der vorliegenden Erfindung eine teilweise Verarbeitung der ermittelten Fortbewegungsdaten (Radumdrehungen) darstellt, wird von dem in dem puckartigen Bauteil 30 integrierten Sender 34 drahtlos an die Anzeigeeinrichtung 50, welche im Sinne der Erfindung Mittel zur weiteren Verarbeitung und/oder zur Anzeige der wenigstens teilweise verarbeiteten Fortbewegungsdaten darstellt, übertragen. Wie bereits unter Bezugnahme auf Fig. 1 erläutert, ist die Anzeigevorrichtung 50 vorzugsweise am Handgelenk des Benutzers des Inline-Skates angebracht.

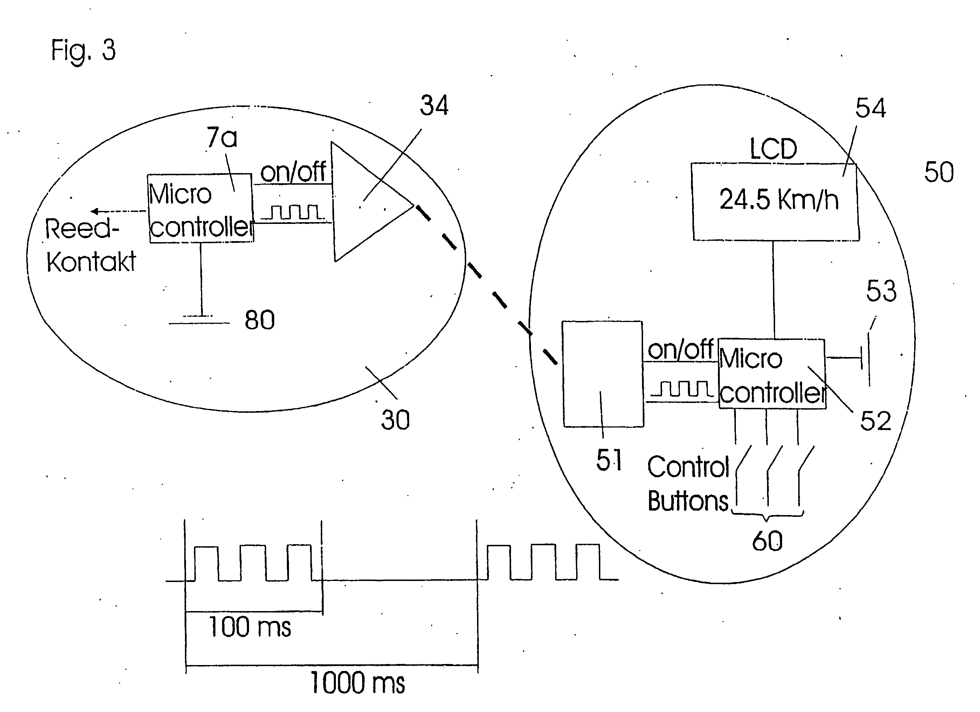

Das Sender-Empfänger-System der vorliegenden Erfindung ist in Fig. 3 noch einmal schematisch dargestellt. Eingangsseitig empfängt hierbei der Mikrocontroller 7a, wie bereits erwähnt, Impulse über den Reed-Kontakt. Die Stromversorgung des Mikrocontrollers 7a sowie des Senders 34 erfolgt vorzugsweise mittels einer Batterie 80.

Das die Standardstrecke darstellende Signal wird auf den Sender 34 übertragen, welcher das Signal drahtlos auf einem Empfänger 51 der Anzeigeeinrichtung 50 überträgt. Der Sender 34 wird hierbei mittels des Mikrocontrollers 7a derart gesteuert, daß er ausschließlich innerhalb bestimmter Sendezeitintervalle (z.B. 0,1 - 0,05 Sekunden pro Sekunde) sendet. Die übrige Zeit wird der Sender mittels des Mikrocontrollers 7a ausgeschaltet, und erst rechtzeitig zum nächsten Sendevorgang wieder eingeschaltet. Ein typischer Signalverlauf ist in Fig. 3, unten schematisch dargestellt.

Man erkennt, daß hier in einem Gesamtzeitintervall von 1000 Millisekunden das die gewünschten Informationen enthaltene Signal lediglich über eine Zeitdauer von 100 Millisekunden übertragen wird. Die übrigen 900 Millisekunden findet keine Signalübertragung statt.

Der Empfänger 51 kann mittels eines in der Anzeigeeinrichtung 50 vorgesehenen Mikrocontrollers 52, welcher über eine Batterie 53 mit Strom versorgt wird, in analoger Weise gesteuert bzw. ein- und ausgeschaltet werden.

Das von dem Empfänger 51 erhaltene Signal wird auf den Mikrocontroller 52 gegeben. Bei dem Signal handelt es sich, wie bereits erläutert, um eine auf ein Rad mit Standarddurchmesser normierte Standardstrecke. Diese Standardstrecke wird in dem Mikrocontroller 52 mit dem individuellen aktuellen Raddurchmesser bzw. Radumfang multipliziert. Hierdurch steht nun die tatsächlich zurückgelegte Strecke pro Zeitintervall zur Verfügung, welche auf eine LCD-Anzeige 54 zur Anzeige übertragen wird.

Da der aktuelle bzw. tatsächliche Raddurchmesser im Laufe der Lebensdauer einer Inline-Skate-Laufrolle abnimmt, kann diese Abnahme mittels einer in den Mikrocontroller 52 integrierten Verschleißfunktion automatisch kompensiert bzw. aktualisiert werden.

Die Information Strecke pro Zeitintervall kann mittels des Mikrocontrollers 52 zur weiteren Berechnung von Funktionen bzw. Fortbewegungsgrößen des Benutzers verwendet werden. Als derartige Funktionen bzw. Fortbewegungsgrößen sind insbesondere die aktuelle Geschwindigkeit, die Maximalgeschwindigkeit, die Durchschnittsgeschwindigkeit, die Tagesstrecke, die Gesamtstrecke, die Skatingdauer, der aktuelle Raddurchmesser und/oder Radumfang zu nennen. Diese Funktionen sind auf der LCD-Anzeige anzeigbar. Es ist auch möglich, diese Funktionen bzw. Fortbewegungsgrößen bereits in dem Mikrocontroller 7a zu ermitteln, wobei es sich hierbei stets um "Standard"-Funktionen handelt, welche, wie beschrieben, bezüglich des aktuellen Raddurchmessers anzupassen sind.

Die Anzeigevorrichtung 50 ist mit mehreren Schaltern 60, welche insbesondere als Druckknöpfe ausgebildet sein können, ausgestattet, wodurch dem Skater bzw. Benutzer ermöglicht wird, auf unterschiedliche Funktionen der erfindungsgemäßen Vorrichtung zurückzugreifen. Insbesondere ist es dem Benutzer möglich, den Durchmesser bzw. den Umfang der Räder bzw. Rollen zu korrigieren, sowie die Tageszähler von Maximalgeschwindigkeit, Tagesstrecke und Skatingdauer zurückzusetzen.

Die armbanduhrartige Anzeigeeinrichtung ist noch einmal in Fig..6 dargestellt. Man erkennt hier die vier Schalter 60, welche einen Start, eine Programmierung bzw. eine Menuenavigation der Vorrichtung gestatten.

Die Anzeigeeinrichtung 50 wird vor Beginn einer Messung vom Benutzer des Inline-Skates aktiviert (Betätigung des Start-Schalters 60). Bei Empfang eines entsprechenden Startsignals schaltet der Mikrocontroller 52 den Empfänger 51 für ein bestimmtes Startzeitintervall, beispielsweise 30 Sekunden, ein. Empfängt der Empfänger 51 in diesem Zeitraum ein Signal von dem Sender 34 der Radelektronik, wird dieses erste Signal von einer in dem Mikrocontroller 52 integrierten Software dazu verwendet, die Sende- und Empfangszeitintervalle zu synchronisieren. Hierdurch kann erreicht werden, daß der Empfänger 51 nur dann angeschaltet wird, wenn eine Sendung durch den Sender 34 der Radelektronik erwartet werden kann. Erkennt der Empfänger 51 während des Startintervalls kein Signal, schaltet sich die Anzeigeeinrichtung 50 wieder ab, und muß zur Durchführung einer erneuten Messung wiederum manuell eingeschaltet werden.
Dadurch, daß das beschriebene Sender-Empfänger-System nur in kurzen Zeitintervallen aktiv ist, ist die Wahrscheinlichkeit, daß mehrere Inline-Skate-Benutzer (Skater) im gleichen Zeitintervall senden bzw. empfangen, sehr gerihg. Somit kann durch die dargestellte Technik eine Überlagerung bzw. Beeinflussung der Signale von Skatern untereinander bzw. eine Störung des eigenen Displays durch andere Skater weitgehend ausgeschlossen werden.

Als Übertragungssignal wird vorzugsweise eine auf eine Trägerfrequenz aufmodulierte Signalfrequenz verwendet. Es ist beispielsweise möglich, ein Intervall sinnvoll erreichbarer Zeiten pro Radumdrehung in bestimmte Teilintervalle zu teilen, und jedem Teilintervall eine bestimmte Signalfrequenz zuzuordnen. Bei Verwendung einer Trägerwelle einer Frequenz von beispielsweise 433 MHz kann eine darauf modulierte Signal- bzw. Informationswelle eine Bandbreite von beispielsweise 1 kHz aufweisen, wobei benachbarte Teilintervalle sich in ihrer Informationswellenfrequenz um 1 Hz unterscheiden.

Es ist ebenfalls möglich, eine digitale Signalübertragung vorzusehen. Es wäre beispielsweise möglich, die relevanten Informationen mittels 2-Byte-Signalen zu übertragen, wobei zusätzlich ein Checkbyte übertragen werden könnte. Mittels eines derartigen Checkbytes ist es insbesondere möglich, übertragene Signale von mehreren, sich in unmittelbarer Nähe zueinander befindlichen Inline-Skate-Benutzern zu unterscheiden.

## Patentansprüche

1. Vorrichtung zum Bestimmen und Anzeigen von Fortbewegungs- oder Fitnessgrößen eines Benutzers eines insbesondere mit einem Untergrund wenigstens zeitweise in Kontakt stehenden Sportgeräts, insbesondere eines Rollschuhs, eines Inline-Skates, eines Rollbretts oder eines Skate- oder Snake-Boards, mit
- in oder an dem Sportgerät angeordneten Mitteln (7a, 7b) zur Aufnahme oder wenigstens teilweisen Verarbeitung von Fortbewegungs- oder Fitnessdaten, insbesondere auf der Grundlage einer Wechselwirkung zwischen dem Sportgerät und dem Untergrund,
- Sendemitteln (34) zum Übertragen der Fortbewegungs- oder Fitnessdaten auf für den Benutzer einsehbare, mit entsprechenden Empfangsmitteln (51) ausgebildete Mittel zur weiteren Verarbeitung und/oder Anzeige der aufgenommenen oder wenigstens teilweise verarbeiteten Fortbewegungs- oder Fitnessdaten, **gekennzeichnet durch**
den Sendemitteln (34) und den Empfangsmitteln (51) zugeordnete Synchronisationsmittel (7a, 52a) zur Abstimmung von Einschaltzeiten und Ausschaltzeiten der Sendemittel (34) und der Empfangsmittel (51) aufeinander.

2. Vorrichtung nach Anspruch 1, **dadurch gekennzeichnet, dass** die Mittel (7a) zur Aufnahme und/oder wenigstens teilweisen Verarbeitung von Fortbewegungs- oder Fitnessdaten ein Zwischensignal auf der Grundlage der Umdrehungen eines Rades des Sportgerätes, insbesondere eine die Zeit pro Radumdrehung darstellende Funktion, ermitteln, wobei dieses Zwischensignal auf die Mittel (52) zur weiteren Verarbeitung übertragbar ist, mittels derer das Zwischensignal unter Berücksichtigung eines tatsächlichen Raddurchmessers oder -umfangs zum Erhalt einer Fortbewegungs- oder Fitnessgröße modifizierbar ist.

3. Vorrichtung nach einem der Ansprüche 1 oder 2, **dadurch gekennzeichnet, dass** die Umdrehungen des Rades mittels eines Reed-Kontaktes ermittelbar sind, welcher mit einem mit dem Rad drehbaren Magnet (34) zusammenwirkt, wobei der Reed-Kontakt nicht-drehbar in oder an dem Rad ausgebildet ist.

4. Verfahren zum Bestimmen und Anzeigen von Fortbewegungs- oder Fitnessgrößen eines Benutzers eines insbesondere mit einem Untergrund wenigstens zweitweise in Kontakt stehenden Sportgeräts, insbesondere eines Rollschuhs, eines Inline-Skates, eines Rollbretts, eines Skate- oder Snakeboards, mit folgenden Schritten:
- Aufnahme und/oder wenigstens teilweise Verarbeitung von Fortbewegungs- oder Fitnessdaten insbesondere auf der Grundlage einer Wechselwirkung zwischen dem Sportgerät und dem Untergrund,
- Übertragung der Fortbewegungs- oder Fitnessdaten auf für den Benutzer einsehbare, mit entsprechenden Empfangsmitteln ausgebildete Mittel zur weiteren Verarbeitung und/oder zur Anzeige der aufgenommenen oder wenigstens teilweise verarbeiteten Fortbewegungs- oder Fitnessdaten,
**dadurch gekennzeichnet, dass** die Übertragung und der Empfang der Fortbewegungs- oder Fitnessdaten während Einschaltzeiten der Sendemittel (34) und der Empfangsmittel (51) erfolgt, wobei in zwischen den Einschaltzeiten liegenden Ausschaltzeiten die Übertragung und der Empfang der Fortbewegungs- oder Fitnessdaten unterbrochen ist, wobei eine Synchronisation der Einschaltzeiten der Sendemittel (34) und der Empfangsmittel (51) aufeinander mittels Synchronisationsmitteln (7a, 52) erfolgt.

5. Verfahren nach Anspruch 4, **dadurch gekennzeichnet, dass** ein Signal auf der Grundlage der Umdrehungen eines Rades des Sportgeräts, insbesondere eine die Zeit pro Radumdrehung darstellende Funktion, ermittelt wird, wobei dieses Signal auf die Mittel zur weiteren Verarbeitung Übertragen wird, mittels derer das Signal unter Berücksichtigung eines tatsächlichen Raddurchmessers oder - umfangs zum Erhalt einer Fortbewegungs- oder Fitnessggröße modifiziert wird.

## Claims

1. A device for determining and displaying travel or fitness quantities of a user of a sports equipment, in particular of a sports equipment which has contact with the ground at least at times, in particular of a roller skate, an inline skate, a roller board, a skateboard or snakeboard with
- means (7a, 7b) provided in or on the sports equipment for recording or at least partially processing travel or fitness data, in particular on the basis of an interaction between the sports equipment and the ground;
- transmitting means (34) to transmit travel or fitness data to means viewable to the user provided with corresponding receiving means (51) for further processing and/or displaying the recorded or at least partially processed travel or fitness data;
**characterized by** synchronizing means (7a, 52a) for the transmitting means (34) and the receiving means (51) for matching switch-on times and switch-off times of the transmitting means (34) and the receiving means (51) with respect to one another.

2. A device according to claim 1, **characterized in that** said means (7a) for recording and/or at least partially processing travel or fitness data determine an intermediate signal on the basis of the revolutions of a wheel of the sports equipment, in particular a function representing the time per revolution of the wheel, this intermediate signal being transmittable to said means (52) for further processing, by means of which the intermediate signal is modifiable for obtaining a travel or fitness quantity, herein taking into account an actual diameter or circumference of the wheel.

3. A device according to claim 1 or 2, **characterized in that** the revolutions of the wheel can be determined by means of a reed contact, which acts together with a magnet (34) that rotates along with the wheel, the reed contact being mounted in a non-rotating manner in or on the wheel.

4. A method for determining and displaying travel or fitness data of a user of a sports equipment, in particular of a sports equipment which has contact with the ground at least at times, in particular of a roller skate, an inline skate, a roller board, a skateboard or snakeboard, with the following steps:
- recording and/or at least partially processing travel or fitness data, in particular on the basis of an interaction between the sports equipment and the ground;
- transmission of the travel or fitness data to means viewable to the user provided with corresponding receiving means for further processing and/or displaying the recorded or at least partially processed travel or fitness data;
**characterized in that** the transmission and/or the reception of the travel or fitness data occurs during switch-on times of the transmitting means (34) and the receiving means (51), wherein in switch-off times between the switch-on times the transmission and the reception of the travel or fitness data is interrupted, a synchronization of the switch-on times of the transmitting means (34) and the receiving means (51) being effected by means of synchronizing means (7a, 52).

5. A method according to claim 4 **characterized in that** an intermediate signal is determined on the basis of the revolutions of a wheel of the sports equipment, in particular a function representing the time per revolution of the wheel, this intermediate signal being transmitted to said means for further processing, by means of which the intermediate signal is modified for obtaining a travel or fitness quantity, herein taking into account an actual diameter or circumference of the wheel.

## Revendications

1. Dispositif pour la détermination et l'affichage de paramètres concernant le déplacement et le fitness d'un utilisateur d'un appareil de sport qui se trouve en particulier au moins temporairement en contact avec une surface sous-jacente, en particulier un patins à roulettes, un roller en ligne, une planche à roulettes, ou une planche dite "skateboard" ou "snakeboard", comprenant :
-- des moyens (7a, 7b) agencés dans ou sur l'appareil de sport pour l'enregistrement ou au moins pour le traitement partiel de paramètres concernant le déplacement ou le fitness, en particulier en se basant sur une interaction entre l'appareil de sport et la surface sous-jacente,
-- des moyens émetteurs (34) pour la transmission des paramètres concernant le déplacement et le fitness vers des moyens visibles pour l'utilisateur et pourvus de moyens récepteurs correspondants (51) pour la poursuite du traitement et/ou l'affichage des paramètres concernant le déplacement ou le fitness enregistrés ou au moins partiellement traités,
**caractérisé par** des moyens de synchronisation (7a, 52a) associés aux moyens émetteurs (34) et aux moyens récepteurs (51) pour mettre en accord des périodes de mise en route et des périodes de mise à l'arrêt des moyens émetteurs (34) et des moyens récepteurs (51) les unes par rapport aux autres.

2. Dispositif selon la revendication 1, **caractérisé en ce que** les moyens (7a) pour l'enregistrement et/ou pour le traitement au moins partiel des paramètres concernant le déplacement et le fitness déterminent un signal intermédiaire en se basant sur les révolutions d'une roue de l'appareil de sport, en particulier une fonction représentant le temps par révolution de la roue, ledit signal intermédiaire étant transmissible vers les moyens (52) destinés à la poursuite du traitement, au moyen desquels le signal intermédiaire peut être modifié en prenant en compte un diamètre effectif ou une circonférence effective de la roue pour obtenir un paramètre concernant le déplacement ou le fitness.

3. Dispositif selon l'une des revendications 1 et 2, **caractérisé en ce que** les révolutions de la roue peuvent être déterminées au moyen d'un contact de Reed, lequel coopère avec un élément (34) qui tourne avec la roue, ledit contact de Reed étant réalisé de façon non-rotative dans ou sur la roue.

4. Procédé pour la détermination et l'affichage de paramètres concernant le déplacement ou le fitness d'un utilisateur d'un appareil de sport qui se trouve en particulier au moins temporairement en contact avec une surface sous-jacente, en particulier un patins à roulettes, un roller en ligne, une planche à roulettes, ou une planche dite "skateboard" ou "snakeboard", comprenant les étapes suivantes:
-- on enregistre ou on traite au moins partiellement des paramètres concernant le déplacement ou le fitness, en particulier en se basant sur une interaction entre l'appareil de sport et la surface sous-jacente,
-- on transmet des paramètres concernant le déplacement ou le fitness vers des moyens visibles pour l'utilisateur et pourvus de moyens récepteurs correspondants pour la poursuite du traitement et/ou l'affichage des paramètres concernant le déplacement ou le fitness enregistrés ou au moins partiellement traités,
**caractérisé en ce que** la transmission et la réception des paramètres concernant le déplacement ou le fitness a lieu pendant les périodes de mise en route des moyens émetteurs (34) et des moyens récepteurs (51), la transmission et la réception des paramètres concernant le déplacement ou le fitness étant interrompu lors de périodes de mise à l'arrêt situées entre les périodes de mise en route, et **en ce que** l'on procède à une synchronisation des périodes de mise en route et des périodes de mise à l'arrêt des moyens émetteurs (34) et des moyens récepteurs (51) les unes par rapport aux autres à l'aide de moyens de synchronisation (7a, 52a).

5. Procédé selon la revendication 4, **caractérisé en ce que** l'on détermine un signal en se basant sur les révolutions d'une roue de l'appareil de sport, en particulier une fonction représentant le temps par révolution de la roue, ledit signal étant transmis vers les moyens pour la poursuite du traitement, au moyen desquels le signal est modifié en prenant en compte un diamètre effectif ou une circonférence effective de la roue pour obtenir un paramètre concernant le déplacement ou le fitness.
